# EUROPÄISCHE PATENTSCHRIFT

(11) **EP 0 826 094 B1**
(45) Veröffentlichungstag und Bekanntmachung des Hinweises auf die Patenterteilung: **02.08.2000**
(21) Anmeldenummer: 96917385.5
(22) Anmeldetag: 20.05.1996
(51) Int. Cl.: E05F 1/10, F16F 3/04, F16F 1/12

(54) **VORRICHTUNG ZUR KRAFTSPEICHERUNG IN FEDERSPEICHERN**
POWER STORAGE DEVICE IN SPRING-LOADED SYSTEMS
DISPOSITIF D'ACCUMULATION D'ENERGIE DANS DES ACCUMULATEURS A RESSORTS

(30) Priorität: 19.05.1995 DE 19518400
(43) Veröffentlichungstag der Anmeldung: 04.03.1998
(73) Patentinhaber: FISCHER, Friedrich, 21037 Hamburg (DE)
(72) Erfinder: FISCHER, Friedrich, 21037 Hamburg (DE)
(74) Vertreter: Winter, Brandl, Fürniss, Hübner, Röss, Kaiser, Polte Partnerschaft
(86) Internationale Anmeldenummer: EP9602157
(87) Internationale Veröffentlichungsnummer: WO9636785

(56) Entgegenhaltungen:
- WO-A-94/17271
- DE-C- 4 341 436
- US-A- 3 335 454

## Beschreibung

Die Erfindung betrifft eine Vorrichtung zur Kraftspeicherung in Federspeichern.

Vorrichtungen zur Kraftspeicherung in Federspeichern, bei denen die Kraftabgabe und die Kraftaufnahme der Federspeicher in Abhängigkeit von den durchlaufenen Wegen programmierbar ist, werden beispielsweise im deutschen Gebrauchsmuster G 93 00 903.8 sowie in der internationalen Patentanmeldung WO 94/17 271, deren Gegenstand im Oberbegriff von Anspruch 1 wiedergegeben ist, beschrieben. Bei der WO 94/17 271 wird vorgeschlagen mehrere voneinander unabhängige Vorrichtungen zu verwenden, um Energiespeicher nacheinander wirksam werden zu lassen. Aufgrund fortlaufender technischer Weiterentwicklungen hat es sich gezeigt, daß die in diesen Druckschriften beschriebenen Vorrichtungen durch technische Ergänzungen weiteren Anwendungsmöglichkeiten erschlossen werden können. Eine einfache Vorrichtung zur Kraftspeicherung mit Hilfe von Federn, bei der die Feder in einem gespannten Zustand ablegbar ist, wird beispielsweise auch in der US-PS 3 335 454 beschrieben.

Die gemäß dem Stand der Technik bekannten Kraftspeicherfedergelenke weisen insbesondere den Nachteil auf, daß die Freizügigkeit bei der Vorgabe der Kraftentfaltung noch mit Einschränkungen versehen ist. Insbesondere ist es durch die Kraftspeicherfedergelenke gemäß dem Stand der Technik nicht in einfacher Weise möglich, entlang eines zu durchlaufenden Weges nahezu beliebige Kraftverläufe vorzugeben.

Die Aufgabe der vorliegenden Erfindung ist es, bei größeren zu durchlaufenden Wegen die Verwendung großdimensionierter Federn zu vermeiden.

Diese Aufgabe wird erfindungsgemäß durch den kennzeichnenden Teil von Anspruch 1, genauer gesagt dadurch gelöst, daß im Gegensatz zum Stand der Technik bei einer einzigen Vorrichtung entlang des Arbeitsbereiches in Wirkrichtung mindestens zwei Federn angeordnet sind, die bei einem Zusammendrücken beziehungweise Entspannen zeitlich nacheinander beaufschlagt werden derart, daß zur Beaufschlagung der Feder ein stationäres Halteelement sowie ein beweglicher Läufer vorgesehen sind, daß eine zeitlich zuerst gespannte Feder derart abgelegt wird, daß entlang eines weiteren Weges des Läufers keine weitere Kraftbeaufschlagung zwischen Läufer und Halteelement durch diese Feder erfolgt und daß eine Reaktivierung der abgelegten Federn zeitlich nacheinander bei einer Rückwärtsbewegung des Läufers vorgesehen ist.

Schließlich besteht eine Aufgabe der vorliegenden Erfindung ebenfalls darin, eine Aufladbarkeit des Federspeichers mit geringem Kraftaufwand zu ermöglichen.

Durch die erfindungsgemäßen Varianten werden Vorrichtungen bereitgestellt, die für einen erweiterten Einsatzbereich verwendbar sind. Das Drehgelenk für die relativ zueinander beweglichen Teile ermöglicht eine nahezu beliebige mechanische Programmierung von einwirkenden Kräften, die entweder der Bewegungsrichtung entgegengesetzt sind oder in Richtung der Bewequngsrichtung wirken. Die Einschaltpunkte der jeweiligen Kräfte können beliebig entlang des zurückzulegenden Weges vorgegeben werden. Bei der Verwendung im Bereich von Ladeklappen von Fahrzeugen werden eine Vielzahl von Gefahren ausgeschlossen, die derzeit bei einem manuellen öffnen der Klappen auftreten. Die Erfindung ist somit dafür geeignet, die Arbeitssicherheit erheblich zu verbessern.

Durch die Möglichkeit zur Ablequng gespannter Federn entlang eines zu durchlaufenden Weges ist es darüber hinaus möglich, von einem Läufer relativ zu einem Stator einen langen Weg durchlaufen zu lassen, ohne Federn entsprechend großer Ausdehnung verwenden zu müssen. Beispielsweise ist es möglich, Vorrichtungen zum Transport von Lasten derart zu konstruieren, daß bei einem Absenken der Lasten Energien in den Federn gespeichert werden und bei einem erneuten Anheben die abgespeicherten Energien die Hubbewegung unterstützen. Die bei einem Absenken der Lasten freiwerdende Energie braucht somit nicht abgebremst und in Wärmeenergie umgesetzt zu werden, sondern die Energie wird mechanisch gespeichert und kann erneut einer Verwendung zugeführt werden. Es braucht für eine derartige Hubvorrichtung somit immer nur diejenige Energie zugeführt zu werden, die die abgespeicherten Energien übersteigt. Eine Kompensation von Änderungen der potentiellen Energie durch Höhenveränderungen wird bislang nur im Bereich von Fahrstühlen durch Gegengewichte erreicht, die über Umlenkrollen mit dem eigentlichen Aufzug gekoppelt sind. Derartige Gegengewichte führen jedoch zu einer vergrößerten Trägheit und belasten darüber hinaus die Umlenkrollen.

Schließlich ist es mit Hilfe der erfindungsgemäßen Aufteilung einer Feder in Einzelfedern möglich, die Dimensionierung der Federn zu verringern, da bei größeren zu durchlaufenden Wegen nicht die gesamten erforderlichen Kräften von einer einheitlichen Feder aufzunehmen sind. Die Kräfte werden vielmehr auf eine Mehrzahl von Federn verteilt, so daß an jeder der Federn erheblich kleinere Kräfte angreifen. Insgesamt kann beispielsweise durch eine Aufteilung einer großen Feder auf zehn kleine Federn das Gesamtgewicht dieser zehn kleinen Federn relativ zum Baugewicht einer großen Feder vermindert werden. Dies führt zu einer Vergeringerung der Dimensionierung der Bauteile und spart bei einer Verwendung im Bereich von Fahrzeugen Energie ein, da das eingesparte Baugewicht nicht beschleunigt und abgebremst werden muß.

Zur Vorgabe definierter Andruckkräfte in einem Ausgangszustand wird vorgeschlagen, daß mindestens eine der Federn von einer Vorspannung beaufschlagbar ist.

Eine Bereitstellung von Bewequngsbereichen ohne Federkraftbesufschlagung erfolgt dadurch, daß für mindestens eine der Federn ein Freilauf vorgesehen ist.

Eine raumsparende Anordnung wird dadurch bereitgestellt, daß mindestens eine der Federn als Drehfeder ausgebildet ist.

Eine mechanisch einfache Führung kann dadurch erfolgen, daß die Feder mit einem Mitnahmebolzen versehen ist, der in einer Führungsnut geführt ist.

Zur Realisierung einer mechanischen Speicherung der Federkräfte ist es möglich, daß für den Mitnahmebolzen in einem gespannten Zustand der Feder eine Aufnahmeausnehmung vorgesehen ist.

Gemäß einer weiteren Ausführungsform ist vorgesehen, daß die Feder als Linearfeder ausgebildet ist.

Zur Vorgabe komplexer Kraft-Weg-Diagramme ist es möglich, daß mindestens zwei Federn vorgesehen sind.

Eine Vergrößerung des Freiraumes bei der Vorgabe von Kraftentfaltungen erfolgt dadurch, daß für die Federn unterschiedliche Einschaltpunkte vorgesehen sind.

Weiterhin ist es möglich, daß für die Federn unterschiedliche Ausschaltpunkte vorgesehen sind.

Bei einer Anwendung im Bereich von Drehscharnieren ist es insbesondere zweckmäßig, daß das Halteelement als eine Hülse ausgebildet ist.

Eine gegenüber von Verschmutzungen gekapselte und mechanisch einfache Ausführungsform wird dadurch bereitgestellt, daß der Läufer innerhalb des hülsenförmigen Halteelementes geführt ist.

Bei bestimmten Anwendungen ist es aber auch möglich, daß der Läufer außenseitig zum Halteelement geführt ist.

Zur Bereitstellung von Hubsystemen ist es zweckmäßig, daß mindestens eine der Federn als Spiralfeder ausgebildet ist.

Eine einfache Realisierung der Kraftabspeicherung kann dadurch erfolgen, daß die Feder in einem gespannten Zustand mit einem Druckelement in einer Aufnahme des Halteelementes ablegbar ist.

Zur Bereitstellung annähernd kontinuierlicher Kraftentfaltungen ist vorgesehen, daß mindestens zwei Federn in Bewequngsrichtung überlappende Arbeitsbereiche aufweisen.

Zur Ermöglichung unterschiedlicher Kraftentfaltungen an vorgebbaren Wirkorten wird vorgeschlagen, daß eine programmierbare Entladung der Federn vorgesehen ist.

Eine weitere Vergrößerung der Freizügigkeit bei der Vorgabe von zurückzulegenden Wegen erfolgt dadurch, daß für die Federn vorgebbare Zwischenablagestellen vorgesehen sind.

Eine zweckmäBige Gestaltung der mechanischen Programmierung erfolgt dadurch, daß eine Führungsnut zur Führung eines Mitnahmebolzens der Feder in Quer- und Längssegmente unterteilt ist.

Eine weitere Variante besteht darin, daß mindestens eine der Federn als Gasdruckfeder ausgebildet ist.

Gemäß einer anderen Ausführungsform ist vorgesehen, daß mindestens eine der Federn als Spiralfeder ausgebildet ist, die im Bereich eines ihrer Enden an einer Drehachse festgelegt ist.

Ein mechanisch einfacher und robuster Aufbau wird dadurch bereitgestellt, daß für die Federn eine permanente Parallelschaltung vorgesehen ist.

Für eine Anwendung im Bereich von Drehscharnieren, insbesondere im Bereich von Scharnieren für landwirtschaftliche Geräte, Anhänger oder Lastkraftwagen, wird vorgeschlagen, daß die Federn im Bereich eines Endes an einer Hülse und im Bereich eines weiteren Endes an einer Welle festgelegt sind.

Weiterbildungen entsprechend der Erfindung sind Gegenstand der Unteransprüche.

In der Zeichnung sind Ausführungsbeispiele d r Erfindung schematisch dargestellt. Es zeigen:
- Fig. 1:: eine perspektivische Darstellung einer als Drehgelenk ausgebildeten und mit Drehfedern versehenen Vorrichtung,
- Fig. 2:: eine andere Darstellung der Vorrichtung gemäß Fig. 1,
- Fig. 3:: eine vergrößerte Darstellung eines Bereiches zur Führung und Ablage eines Federmitnahmebolzens,
- Fig. 4:: eine Darstellung einer Führung des Federmitnahmebolzens bei einer Verwendung von linearen Zug- oder Druckfedern,
- Fig. 5:: eine teilweise geschnittene Darstellung einer Vorrichtung mit mehrfach unterteiltem Programmierweg,
- Fig. 6:: eine Darstellung einer Ankopplung der Schubstange der Vorrichtung gemäß Fig. 5 an ein Drehgelenk,
- Fig. 7:: einen beispielhaften Verlauf für eine programmierte Kraftentfaltung entlang eines zu durchlaufenden Weges,
- Fig. 8:: eine Prinzipdarstellung zur Vorgabe eines Programmierweges mit Freilauf,
- Fig. 9:: eine vergrößerte Darstellung eines anderen Programmierweges,
- Fig. 10:: den Hintergrund der Erfindung,
- Fig. 11:: eine Vorrichtung, bei der eine Drehfeder in eine Mehrzahl von Einzelfedern unterteilt ist,
- Fig. 12:: eine weitere Variante zur Realisierung eines Programmierweges mit Freilauf,
- Fig. 13:: eine Führungshülse mit Vorspannrastungen und einem Führungsschlitz für Federenden entsprechend einer Ausführungsform der Erfindung,
- Fig. 14:: eine Prinzipdarstellung zur Veranschaulichung von entlang eines zu durchlaufenden Weges ablegbaren Federn, die im Bereich eines Endpunktes schwenkbar angeordnet sind,
- Fig. 15:: ein Kraft-Weg-Diagramm zur Veranschaulichung einer weiteren programmierbaren Kraftentfaltung entlang eines zu durchlaufenden Weges,
- Fig. 16:: eine schematische Darstellung eines weiteren Ausführungsbeispiels eines erfindungsgemäßen Federspeichers,
- Fig. 17:: einen Querschnitt durch einen Federspeicher mit einem zentralen Hauptdruckrohr und einer Vielzahl von außenliegenden Federspeicherelementen entsprechend einem noch weiteren Ausführungsbeispiel der Erfindung, und
- Fig. 18:: eine Abwicklung eines Mantels des Hauptdruckrohrs aus Fig. 17.

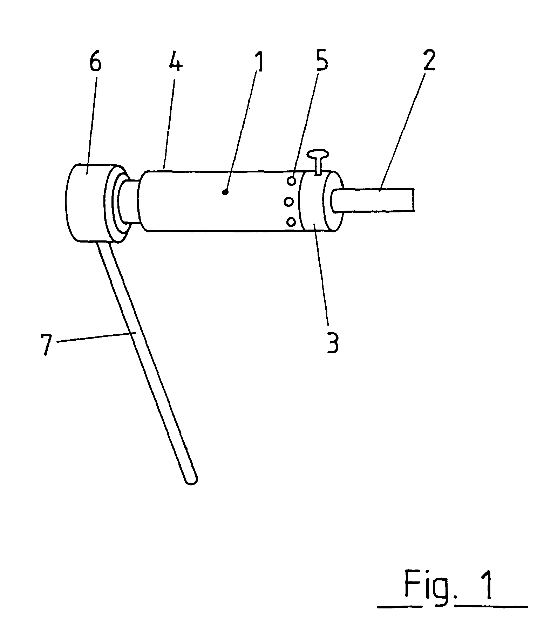

Fig. 1 zeigt in einer perspektivischen Darstellung ein Drehgelenk (1), das eine Tragwelle (2), eine Federaufnahmehülse (3) sowie eine Vorspannhülse (4) aufweist. Durch eine Verdrehung der Vorspannhülse (4) relativ zur Federaufnahmehülse (3) können innerhalb der Federaufnahmehülse (3) angeordnete Federn mit einer Vorspannung beaufschlagt werden. Es ist beispielsweise möglich, die Vorspannhülse (4) mit Arretierausnehmungen (5) zu versehen und hierdurch eine gerasterte Vorspannung zu ermöglichen.

An einem aus der Federaufnahmehülse (3) herausragenden Ende der Tragwelle (2) ist ein Mitnehmer (6) befestigt, der einen Kopplungsstab (7) trägt. Der Kopplungsstab (7) kann Drehmomente auf ein zu positionierendes Teil übertragen bzw. von diesem Teil erzeugte Momente in das Drehgelenk (1) einleiten.

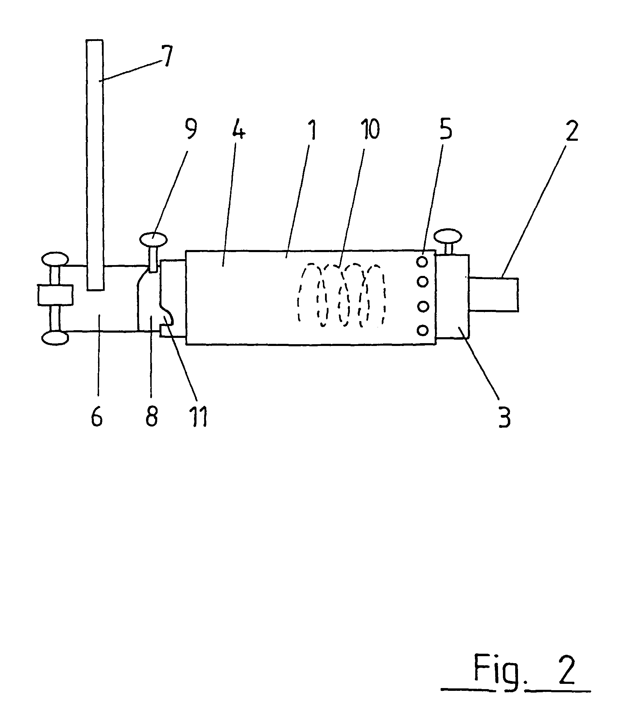

Fig. 2 veranschaulicht in einer anderen Darstellung die Funktionen des Drehgelenkes (1) gemäß Fig. 1. Insbesondere ist erkennbar, daß der Mitnehmer (6) eine Führungsnut (8) für einen Mitnahmebolzen (9) aufweist, der von innerhalb der Federaufnahmehülse (3) angeordneten Federn (10) erzeugte Kräfte auf den Mitnehmer (6) überträgt. Insbesondere ist daran gedacht, die Führungsnut (8) so auszubilden, daß mindestens ein Freilauf realisierbar ist. Beispielsweise kann der Freilauf zu einem Beginn der Bewequng vorgesehen sein. Darüber hinaus ist es aber auch ebenfalls möglich, zu Beginn der Bewegung bereits eine Vorspannung zu realisieren.

Nach einer vorgebbaren Verdrehung des Mitnehmers (6) relativ zur Federaufnahmehülse (3) wird der Mitnahmebolzen (9) in eine Aufnahmeausnehmung (11) übergeben und dort abgelegt. Hierdurch erfolgt keine weitere Kraftbeaufschlagung des Mitnehmers (6) und dieser kann sich frei weiter bewegen. Bei einer Bewegung des Mitnehmers (6) in entgegengesetzter Richtung wird der Mitnahmebolzen (9) bei einer Anordnung von Aufnahmeausnehmung (11) und Führungsnut (8) nebeneinander wieder in den Bereich des Mitnehmers (6) überführt und besufschlagt den Mitnehmer (6) mit den gespeicherten Federkräften. Zur Erleichterung eines Wechselns des Mitnahmebolzens (9) zwischen der Führungsnut (8) und der Aufnahmeausnehmung (11) ist es möglich, auf dem Mitnahmebolzen (9) eine Rolle zu fiihren, die an den jeweils vorgesehenen Flanken abrollt.

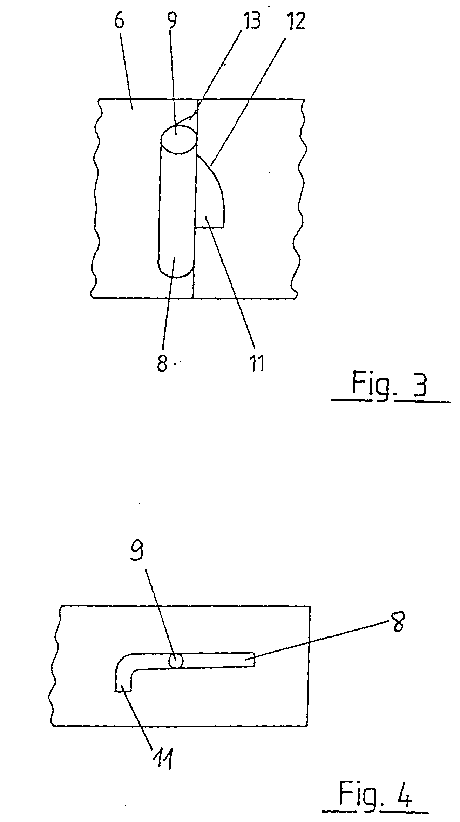

Fig. 3 zeigt in einer vergrößerten Darstellung noch einmal die Anordnung des Mitnahmebolzens (9) im Bereich der Führungsnut (8) und der Aufnahmeausnehmung (11). Insbesondere ist erkennbar, daß im Bereich der Führungsnut (8) sowie der Aufnahmeausnehmung (11) schräge Auflaufflanken (12,13) angeordnet sind. Die Auflaufflanken (12,13) erleichtern einen Übergang des Mitnahmebolzens (9), da aufgrund der einwirkenden Federkräfte durch die Auflaufflanken (12,13) jeweils quer zur Bewegungsrichtung ausgerichtete Kraftkomponenten entfaltet werden, die den Übergang des Mitnahmebolzens (9) unterstützen.

In Fig. 4 ist eine andere Ausführungsform dargestellt, bei der statt Drehfedern Linearfedern, beispielsweise Zug- oder Druckfedern, verwendet werden. Der Mitnahmebolzen (9) wird hierbei in einer linear ausgebildeten Führungsnut. (8) bewegt und in einer Aufnahmeausnehmung (11) abgelegt, die im wesentlichen quer zur Führungsnut (8) ausgerichtet ist.

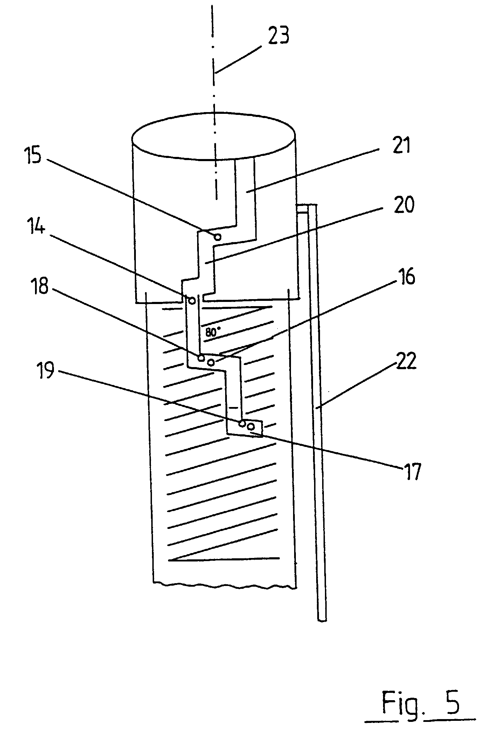

In Fig. 5 wird eine weitere Ausführungsform veranschaulicht. Die Führungsnut ist hier entlang einer Führungshülse angeordnet. Es sind ein erster Mitnehmer (14) und ein zweiter Mitnehmer (15) vorgesehen. Die Kraftentfaltung kann beispielsweise derart erfolgen, daß eine erste Stufe (16) bei einem Drehwinkel von 80 Grad und eine zweite Stufe (17) bei einem Drehwinkel von 50 Grad aktiviert wird. Zur Positionierung der Mitnahmebolzen (9) sind Haltenasen (18,19) vorgesehen. Für einen Winkelbereich ab 40 Grad kann ein erster Freilauf (20) und für einen winkelbereich ab 10 Grad ein zweiter Freilauf (21) vorgesehen sein. Die Feder (10) ist innerhalb der Federaufnahmehülse (3) angeordnet. Eine Kraftauskopplung erfolgt über eine Kraftübertragungsstange (22). Die Freilaufbereiche (20, 21) sind im wesentlichen als Schlitze ausgebildet, die sich in Richtung einer Längsachse (23) erstrecken.

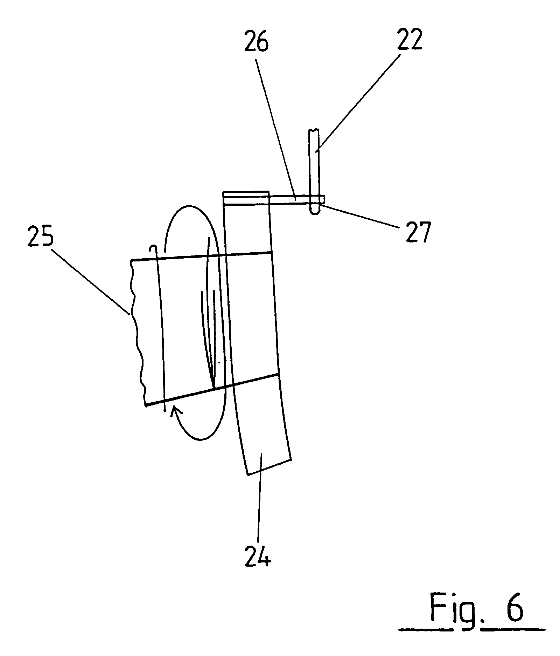

Fig. 6 veranschaulicht die Ankopplung der Kraftübertragungsstange (22) an ein Rad (24), das auf einer Achse (25) aufsitzt. Im Bereich des Rades (24) ist eine Querstange (26) befestigt, die über eine Buchse (27) mit der Kraftübertragungsstange (22) gekoppelt ist. Hierdurch ist eine Umsetzung der Längsbewegung der Kraftübertragungsstange (22) in eine Drehbewegung des Rades (24) möglich. Auf der Grundlage der Figurenbeschreibung zu Fig. 5 wird das Rad (24) ab einem Drehwinkel von 80 Grad mit einer Spannung beaufschlagt, die bei 40 Grad in einen Freilauf übergeht. Bei 50 Grad setzt die Spannung des zweiten Elementes ein, das bei 10 Grad mit seinem Freilauf versehen ist.

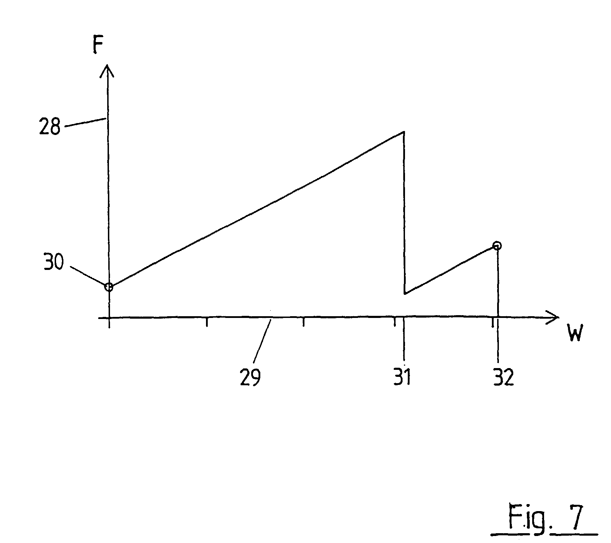

Fig. 7 zeigt beispielhaft einen generierbaren Kraftverlauf in einem Diagramm, das eine Kraftachse (28) sowie eine Wegachse (29) aufweist. Es ist eine Vorspannung (30) vorgesehen, die zunächst linear entlang des zu durchlaufenden Weges gesteigert wird. Zu einem Umschaltpunkt (31) setzt ein Freilauf ein, der noch von einer zweiten Feder überlagert ist, die ebenfalls zum Umschaltpunkt (31) bereits eine Vorspannung aufweist. Hinter dem Umschaltpunkt (31) erfolgt dann bis zu einem Endpunkt (32) wieder ein linearer Kraftanstieg. Ab dem Endpunkt (32) ist wiederum ein Freilauf wirksam, der eine Rückführung der Kraftbeaufschlagung auf Null zur Folge hat.

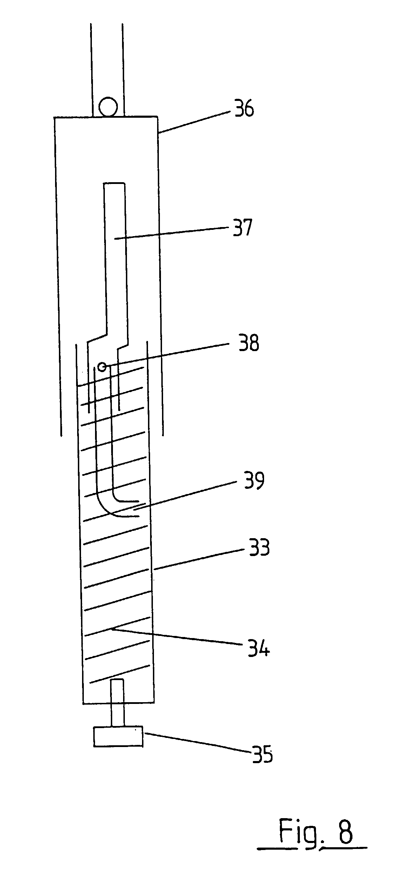

Fig. 8 zeigt eine weitere Ausführungsform der Erfindung. Ein hülsenförmiger Standkörper (33) ist in einem Innenraum mit einer Feder (34) versehen. Uber ein Einstellelement (35) ist ein Federdruck vorgebbar. Auf dem Standkörper (33) ist eine kraftaufnehmende Hülee (36) geführt. Eine Kraftabnahme erfolgt seitlich an der kraftaufnehmenden Hülee (36). Ein programmierbarer Schaltweg (37) kann als Schlitz im Bereich des Standkörpers (33) sowie der kaftaufnehmenden Hülse (36) ausgebildet sein. Die Feder greift über einen Mitnehmer (38) in den Schaltweg (37) ein. Im Bereich einer Rastung (39) ist der Mitnehmer (38) nach einer Spannung der Feder (34) ablegbar. Grundsätzlich können mehrere derartige Standkörper (33) mit kraftaufnehmender Hülse (36) hintereinander geschaltet werden. Grundsätzlich ist es ebenfalls möglich, zusätzliche äußere Federn um den Standkörper (33) herum anzuordnen.

Alternativ zu der Verwendung von Federn (34), die als Zug- oder Druckfedern ausgebildet sind, ist es auch möglich, andere kraftspeichernde Elemente einzusetzen. Beispielsweise ist eine Verwendung von Gasdruckfedern möglich. Gleichfalls ist es möglich, vorgegebene Rasterpositionen vorzusehen. Als Führungselemente können auch federbelastete Rollen oder Räder verwendet werden, die in einem Träger abrollen.

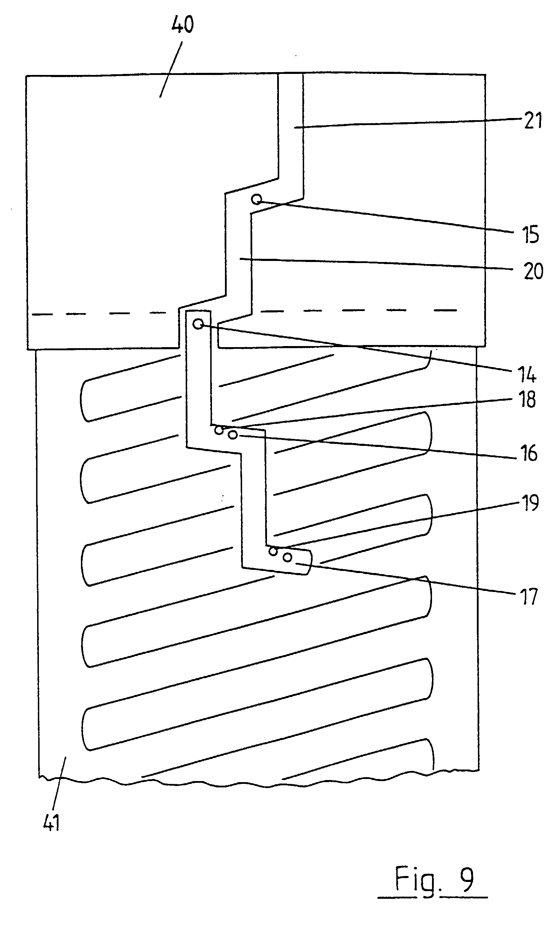

Fig. 9 zeigt in einer vergrößerten Darstellung noch einmal die wesentlichen Funktionselemente gemäß Fig. 5. Insbesondere ist deutlich erkennbar, daß die Führungsschlitze im Bereich von rohrartigen Elementen angeordnet sind. Es wird in der Zeichnung zwischen einem Läuferrohr (40) und einem Programmrohr (41) unterschieden. Durch die Vorgabe des Schaltweges im Bereich des Programmrohres (41) ist es möglich, beliebige Arbeitswege einzeln einzugeben und an einen jeweiligen Bedarf anzupassen. Das Läuferrohr (40) kann als kraftaufnehmende Hülse entsprechend programmiert werden. Beispielsweise ist es möglich, die eingebaute Feder derart zu programmieren, daß ein erster zu durchlaufender Weg bis zu einer ersten Stufe reicht. Im Anschluß an die erste Stufe setzt der erste Freilauf (20) ein. Anschließend wird der zweite Mitnehmer (15) wirksam und zieht die angekoppelten Teile in den Bereich der zweiten Stufe (17). Anschließend wird der zweite Freilauf (21) wirksam.

Es ist beispielsweise möglich, den programmierten Weg auf einen Drehwinkel von 180 Grad auszulegen. Wird das entsprechend angelenkte Rad über 180 Grad gedreht, so wird ein vollständiger Bewequngsablauf auf 360 Grad vollendet und die beispielsweise als Druckfeder ausgebildete Feder zieht entsprechend dem Programm die zuvor positionierten Bauteile zurück.

Insbesondere ist es möglich, über einen gesamten vorgesehenen Spannweg Zwischenspeicherungen vorzusehen. Im Bereich des Läuferrohres (40) wird hierbei die gewünschte Programmierung vorgenommen. Entlang eines realisierbaren Spannweges können beliebig viele Zwischenspeicherungen vorgenommen werden. Die Programmierung kann sowohl im Bereich des Läuferrohres (40) als auch im Bereich des Programmierrohres (41) erfolgen.

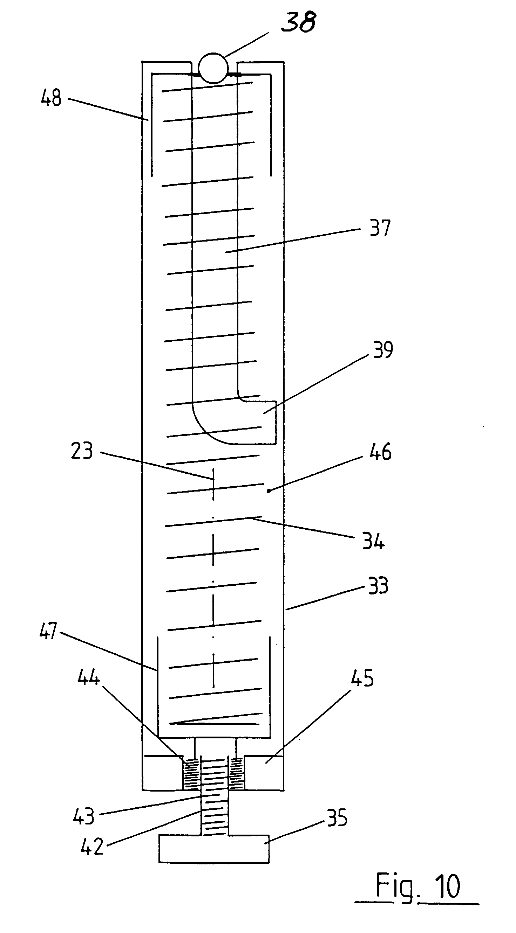

Eine weitere Variante der Erfindung ist in Fig. 10 dargestellt. Der grundsätzliche Aufbau ähnelt der Darstellung gemäß Fig. 8. Es ist ebenfalls im Bereich eines Standkörpers (33) eine Feder (34) angeordnet, die von einem Einstellelement (35) vorspannbar ist. Das Einstellelement (35) greift mit einem Schaft (42), der ein Außengewinde (43) aufweist, in ein Innengewinde (44) eines Bodenteiles (45) des Standkörpers (33) ein. Innerhalb eines Innenraumes (46) des Standkörpers (33), der die Feder (34) aufnimmt, ist ein Halterungsbecher (47) angeordnet, in den ein Ende der Feder (34) eingeführt ist. Der Halterungsbecher (47) ist mit dem Schaft (42) verbunden.

Bei einer Verstellung des Einstellelementes (35) wird der Halterungsbecher (47) in Richtung der Längsachse (23) positioniert und überträgt dabei die vorzugebende Vorspannung auf die Feder (34). Ebenfalls ist erkennbar, daß der Mitnehmer (38) mit einem Arbeitsbecher (48) gekoppelt ist, der das dem Halterungsbecher (47) abgewandte Ende der Feder (34) aufnimmt. Bei einer Positionierung des Mitnehmers (38) wird der mit diesen verbundene Arbeitsbecher (48) verstellt und bringt entsprechende Spannkräfte auf die Feder (34) auf.

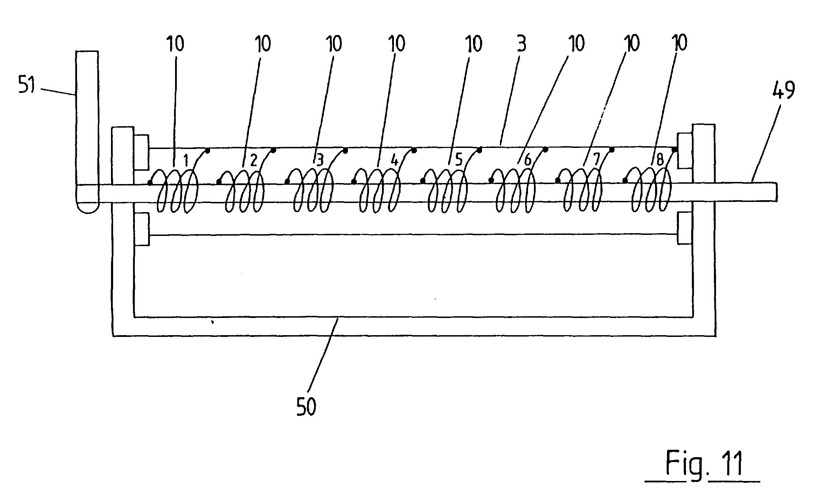

Fig. 11 zeigt eine Vorrichtung, bei der innerhalb einer Federaufnahmehülse (3) eine Mehrzahl von Federn (10) angeordnet sind, die als Drehfedern ausgebildet sind. Genauer gesagt sind acht Federn (10) innerhalb der Federaufnahmehülse (3) angeordnet. Die Federn (10) sind jeweils im Bereich eines Endes an der Federaufnahmehülse (3) festgelegt. Ein weiteres Ende der Federn (10) ist mit einer Welle (49) verkoppelt. Die Welle (49) ist drehbeweglich in einem Träger (50) geführt und die Federaufnahmehülse (3) ist relativ zum Träger (50) unbeweglich festgelegt. An der Welle (49) ist ein Gewichtskörper (51) befestigt, der eine den Kräften der Federn (10) entgegengesetzte Gegenkraft an der Welle (49) entfaltet.

Wird beispielsweise jede der Federn (10) so dimensioniert, daß eine maximale Federkraft von 20 kp entfaltbar ist, so ergibt sich durch die Addition der Wirkung der acht Federn eine Gesamtkraft von 160 kp. Gegenüber einer grundsätzlich möglichen Verwendung einer einheitlichen Feder mit einer maximalen Federkraft von 160 kp bietet die Verwendung von acht separaten Federn (10) den Vorteil, daß insgesamt das Baugewicht verringert werden kann, da im Bereich jeder der Federn (10) nur relativ geringe Kräfte entfaltet werden. Die Stärke des Materials der Federn (10) kann hierdurch reduziert werden.

Grundsätzlich ist es möglich, eine beliebige Anzahl von Federn (10) innerhalb der Federaufnahmehülse (3) anzuordnen. Die Unterteilung der erforderlichen Federkraft auf Einzelfedern (10) kann somit nach den jeweiligen Einsatzrandbedingungen erfolgen. Auch bei dieser Vorrichtung ist es möglich, eine Vorspannbarkeit der Federn (10) zu realisieren. Der Federvordruck kann dadurch verstellt werden, daß eine entsprechende Anordnung der Federaufnahmehülse (3) im Bereich des Trägers (50) erfolgt. Insbesondere ist daran gedacht, den Träger (50) als einen Tragrahmen auszubilden.

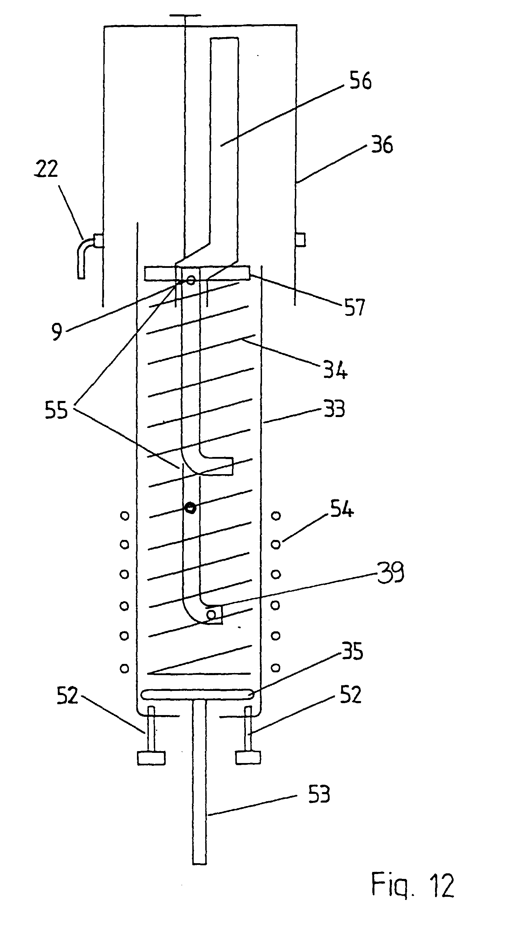

In Fig. 12 ist eine weitere Variante einer linearen Anordnung der Vorrichtung veranschaulicht. Im Bereich eines Standkörpers (33) ist wiederum eine Feder (34) angeordnet, die von einem Einstellelement (35) vorspannbar ist. Zur Positionierung des Einstellelementes (35) sind Schrauben (52) vorgesehen. An den Standkörper (33) angekoppelt ist eine Zugeinrichtung (53). Die Zugeinrichtung (53) kann beispielsweise als eine Kette ausgebildet sein. Außenseitig um den Standkörper (33) herum ist eine Dämpfungsfeder (54) angeordnet, die als Aufpralldämpfer wirkt. Die Dämpfungsfeder (54) drückt die Kraftaufnahmehülse (36) zurück, wenn diese in den Bereich der Dämpfungsfeder (54) gelangt.

An die Kraftaufnahmehülse (36) ist wiederum eine Kraftabnahme angekoppelt, beispielsweise eine Kraftübertragungsstange (22). Eingezeichnet ist in Fig. 12 ein zur Verfügung stehender Spannweg (55). Bei einer Bewequng der kraftaufnehmenden Hülse (36) relativ zum Standkörper (33) steht ein Freilauf (56) zur Verfügung, während dessen die Feder (34) druckbeaufschlagt ist. Beim Durchlaufen des Spannweges (55) wird über den Mitnahmebolzen (9) sowie eine angekoppelte Druckplatte (57) eine Spannung der Feder (34) durchgeführt. Im Bereich der Rastung (39) wird der Mitnahmebolzen (9) nach erfolgter Spannung abgelegt, so daß eine Kraftentlastung verursacht wird.

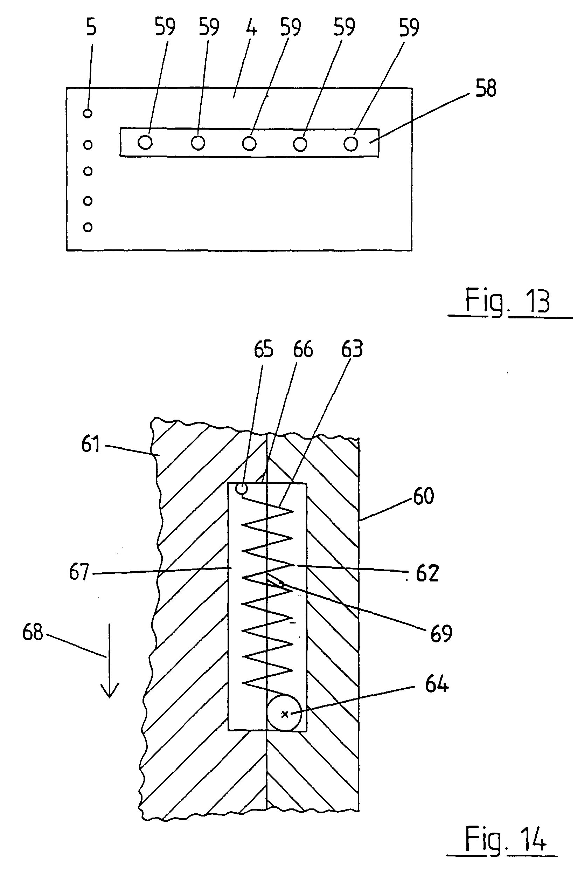

Fig. 13 zeigt in einer Seitenansicht die Vorspannhülse (4), die mit den Arretierungsausnehmungen (5) Yersehen ist. Die Vorspannhülse (4) weist einen Längsschlitz (58) auf, in den Federenden (59) einer Mehrzahl von Federn (10) eingreifen. Bei einer Verdrehung der Vorspannhülse (4) erfolgt eine gleichzeitige Vorspannung aller Federn (10). Grundsätzlich ist es ebenfalls denkbar, statt eines linearen Längsschlitzes (58) einen konturierten Schlitz (58) zu verwenden, der bei einer Verdrehung der Vorspannhülse (4) unterschiedliche Federn (10) unterschiedlich vorspannt.

Fig. 14 zeigt in einer Querschnittdarstellung die Anordnung eines relativ zu einem stationären Halteelement (60) beweglichen Läufers (61). Das Halteelement (60) weist eine Aussparung (62) auf, in der eine Feder (63) über ein Gelenk (64) verschwenkbar gelagert ist. In einem verschwenkten Zustand ist die Feder (63) mit einem Druckelement (65) gegen eine Andruckfläche (66) des Läufers geführt, die als Begrenzung einer Ausnehmung (67) des Läufers ausgebildet sein kann. Bei einer Bewegung des Läufers (61) in einer Spannrichtung (68) wird die Feder (63) zusammengedrückt und in einem gespannten Zustand mit dem Druckelement (65) im Bereich einer Aufnahme (69) abgelegt, die im Bereich des stationären Halteelementes (60) angeordnet ist. In diesem Zustand wird von der Feder (63) Energie gespeichert und es erfolgt keine weitere Kraftbeaufschlagung des Läufers (61). Der Läufer (61) kann hierdurch von der Feder (63) unbelastet weiter in Spannrichtung (68) bewegt werden und weitere Federn (63) spannen.

Bei einer Entladung der Federn (63) wird der Läufer (61) entgegen der Spannrichtung (68) bewegt. Die vorgesehenen Federn (63) greifen dabei nacheinander bzw. einander sich zeitlich überlappend am Läufer (61) an und können diesen über einen weiten Weg entgegen der Spannrichtung (68) befördern. Auch bei einem großen derartigen Hubweg sind somit nur relativ gering dimensionierte und damit auf geringem Bauraum unterbringbare Federn (63) erforderlich.

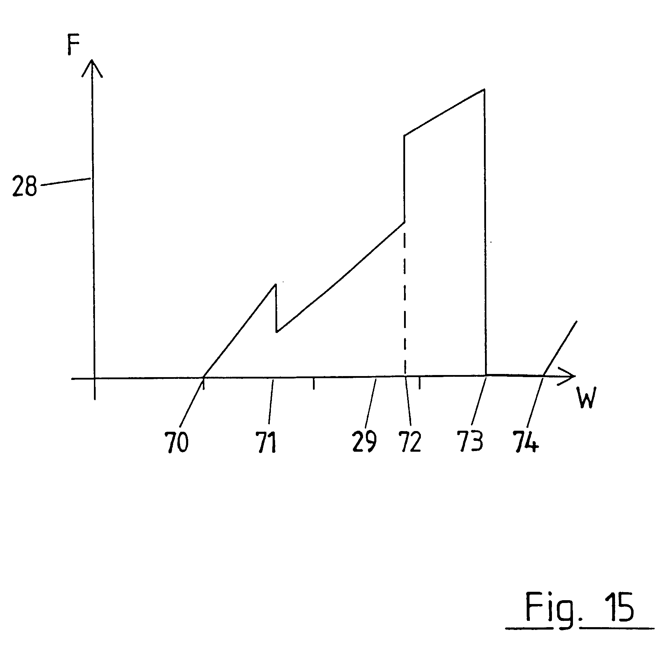

Fig. 15 zeigt ähnlich zur Fig. 7 ein weiteres Kraft-Weg-Diagramm, das bezüglich der Kraftachse (28) und der Wegachse (29) eingetragen ist. Bis zu einem Umschaltpunkt (70) erfolgt keine Kraftbeaufschlagung durch einen entsprechenden Freilauf. Ab dem Umschaltpunkt (70) setzt eine Feder ein und baut linear eine Kraft auf. Von einem Umschaltpunkt (70) an wird die erste Feder festgesetzt und eine zweite Feder wirksam, die mit einer Vorspannung versehen ist. Ab dem Umschaltpunkt (72) wird zur vorher aktivierten Feder eine mit Vorspannung versehene weitere Feder aktiviert. Ab dem Umschaltpunkt (73) wird wiederum ein Freilauf wirksam, von dem sämtliche Federn erfaßt sind. Ab dem Umschaltpunkt (74) erfolgt dann wieder ein linearer Kraftanstieg durch Aktivierung einer weiteren Feder. Durch die entsprechende Kombination einer Mehrzahl von Federn lassen sich nahezu beliebige Kraft-Weg-Diagramme realisieren. Bei einer geeigneten Kombination von Zug- und Druckfedern lassen sich auch entgegengesetzte Kräfte abspeichern.

Sowohl bei der Verwendung von Drehfedern als auch bei der Verwendung von linearen Federn ist es möglich, vorbestimmte Arretierungen vorzusehen. Beispielsweise können Federkränze mit Sperren, Querstifte oder vergleichbaren Bauelemente eingesetzt werden. Alternativ zur Verwendung von L-förmigen Schlitzen zur Ablage von gespannten Federn ist es auch möglich, andersartig ausgebildete Ablageolemente einzusetzen. Beispielsweise ist es möglich, feststehende Einrastkörper einzusetzen oder kraftaufnehmende Einrastscheiben zu verwenden.

Zusätzlich zur Verwendung der Federn ist es möglich, mechanische Arretierungselemente vorzusehen. Beispielsweise ist es möglich, Arretierungen über Zapfen vorzusehen, die in U-förmige Nuten eingreifen. Die Arretierung kann beispielsweise automatisch nach einem Führen des Zapfens in den Bereich der Nut erfolgen. Zur Freigabe kann eine Knopfauslösung vorgesehen sein, die von einem Benutzer betätigt wird und mit Hilfe dessen der Zapfen wieder aus der Nut herausgedrückt wird. Zur Realisierung der Arretiervorrichtungen sind aber auch eine Vielzahl anderer Ausführungsformen denkbar, beispielsweise Zahnscheiben oder anders gestaltete Profile.

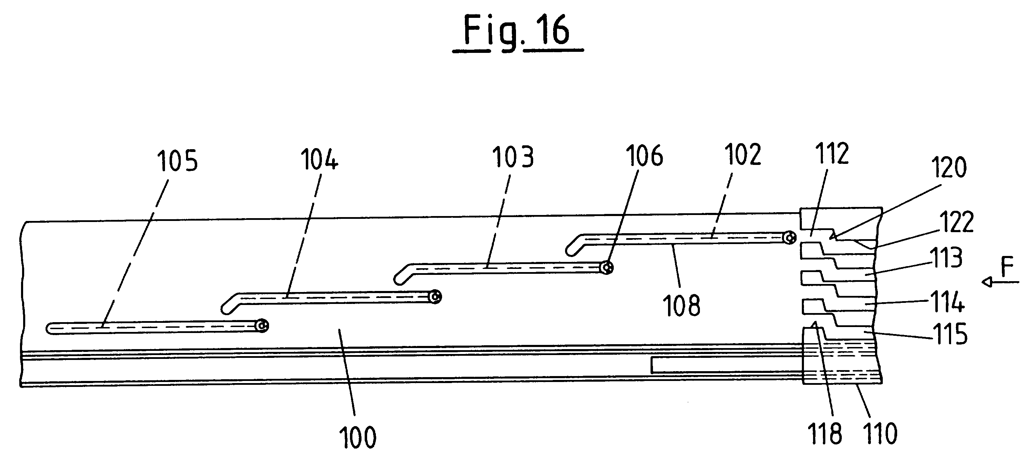

Figur 16 zeigt ein weiteres Ausführungsbeispiel des erfindungsgemäßen Federspeichers, wobei wiederum wie bei den vorstehenden im Zusammenhang mit den Figuren 4 bis 15 beschriebenen Ausführungsbeispielen vorzugsweise eine axiale Beanspruchung der Druck-/Zugfedern erfolgt.

Bei dem in Figur 16 gezeigten Ausführungsbeispiel sind in einer Federaufnahmehülee 100 eine Vielzahl von Federelementen 102 bis 105 gelagert. Diese sind in Axialrichtung und quer Axialrichtung versetzt zueinander angeordnet. Jeder Mitnehmer 106 eines Federelements 102 bis 105 erstreckt sich durch eine schlitzförmige Kulissenführung 108, die einen Linearbereich und einen dazu angestellten angewinkelten Endbereich aufweist.

Beim gezeigten Ausführungsbeispiel ist die Federaufnahmehülee 100 nicht rohrförmig sondern als kastenförmiges Gehäuse ausgebildet. Selbstverständlich ist die Geometrie Gier Federaufnahmehülse 100 beliebig variierbar. Es muß nur sichergestellt sein, daß eine Vielzahl von Federelementen in Axialrichtung versetzt aufgenommen werden kennen. Beim gezeigten Ausführungsbeispiel überlappt der angewinkelte Endbereich jeder Kulissenführung 108 mit dem Linearbereich der benachbarten Kulissenführung 108 , so daß bei der Beaufschlagung des Federspeichers das eine Federelement 102 in seinem Endbereich vorgespannt wird, während bereits das benachbarte Federelement 103 im Anfangsbereich mit einer Spannung beaufschlagt wird.

Auf der Federaufnahmehülse 100 ist eine Mitnehmerhülse 110 gleitend verschiebbar geführt. Die Mitnehmerhülse 110 hat eine Vielzahl von nebeneinander liegenden (Ansicht nach Figur 16) Schlitzen 112 bis 115, die in demjenigen Umfangsrand münden, der den Kulissenführungen 108 der Federaufnahmehülse 100 zugewandt ist. Gemäß der Darstellung nach Figur 16 hat jeder Schlitz 112 bis 115 einen achaparallel verlaufenden ersten Linearabschnitt 118, der jeweils koaxial zu einer der Kulissenführungen 108 (Linearbereich) ausgebildet ist. An den ersten Linearabschnitt 118 schließt sich ein abgewinkelter Anlageabschnitt 120 an, durch den eine Anlagefläche für die Mitnehmer 106 zur Verfügung gestellt wird. Der Anlageabschnitt 120 geht in einen weiteren Linearabschnitt 122 des jeweiligen Schlitzes 112 bis 115 über, dessen Länge in der Regel größer als diejenige des ersten Linearabschnitts 118 ist. Der Einfachheit halber wurde in der Darstellung nach Figur 16 lediglich der wichtige Anfangsbereich der Schlitze 112 bis 115 dargestellt.

Bei Beaufschlagung des Federelements in Richtung F (Figur 16) wird die Mitnehmerhülse 110 gegenüber der feststehenden Federaufnahmehülse 100 verschoben, so daß zunächst der Mitnehmer 106 des Federelements 102 in den ersten Linearabschnitt 118 des Schlitzes 112 eingeführt wird. Da der erste Linearabschnitt 118 koaxial ausgebildet ist, wird der Mitnehmer in dieser Relativposition der Mitnehmerhiilse 110 nicht bewegt. D.h., der erste Linearabschnitt 118 wirkt als Freilaufabschnitt. Bei einer weiteren Relativverschiebung der Mitnehmerhülse 110 gelangt der Mitnehmer 106 in Anlage an die Anschlagfläche des Anlageabschnitts 120, so daß der Mitnehmer 106 durch die Mitnehmerhülse 110 mitgenommen und das Federelement 102 vorgespannt wird.

Nach einer weiteren Relativverschiebung der Mitnehmerhülse 110 wird dann der Mitnehmer 106 des Federelements 103 in den zugeordneten Schlitz 113 eingeführt, sodaß der gleiche Spannvorgang erfolgt, wie er vorstehend beschrieben wurde. Im Anschluß daran gelangt der Mitnehmer 106 des Federelements 102 in den abgewinkelten Endbereich der Kulissenführung 108, so daß der Mitnehmer quer zur Axialrichtung der Federaufnahmehülee 100 ausgelenkt wird und somit weg vom Anlageabschnitt 120 in den weiteren Linearabschnitt 122 der Mitnehmerhülse 110 verschobenwird. Durch die formschlüssige Aufnahme des Mitnehmers 106 zwischen Anlageabschnitt 120 und dem abgewinkelten Endabschnitt wird verhindert, daß der Mitnehmer 106 zurück in den linearen Teil der Kulissenführung 108 gelangen kann, so daß der Mitnehmer 106 während der weiteren Axialverschiebung der Mitnehmerhiilse 110 in seiner Anschlagposition am abgewinkelten Endabschnitt der Kulissenführung 108 gehalten wird.

Das Spannen der sonstigen Federelemente 103 bis 106 erfolgt auf gleiche Weise, so daß auf eine ausführliche Beschreibung verzichtet werden kann.

Bei Entlastung der Mitnehmerhülse 110 werden die Federelemente 102 und 105 in umgekehrter Reihenfolge entspannt, wobei die einzelnen Federelemente bei der Rückwärtsbewegung in der Mitnehmerhülse 110 nur dann ihre gespeicherte Federenergie abgeben, wenn der Mitnehmer 106 am Anlageabschnitt 120 anliegt. Solange sich der Mitnehmer in den Linearabschnitten 118, 122 befindet, erfolgt keine Abgabe der gespeicherten Federenergie.

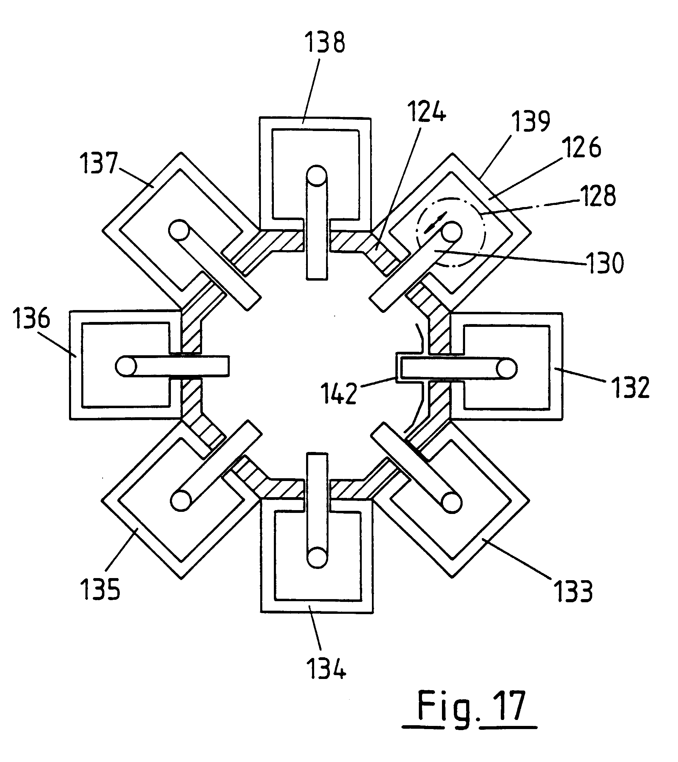

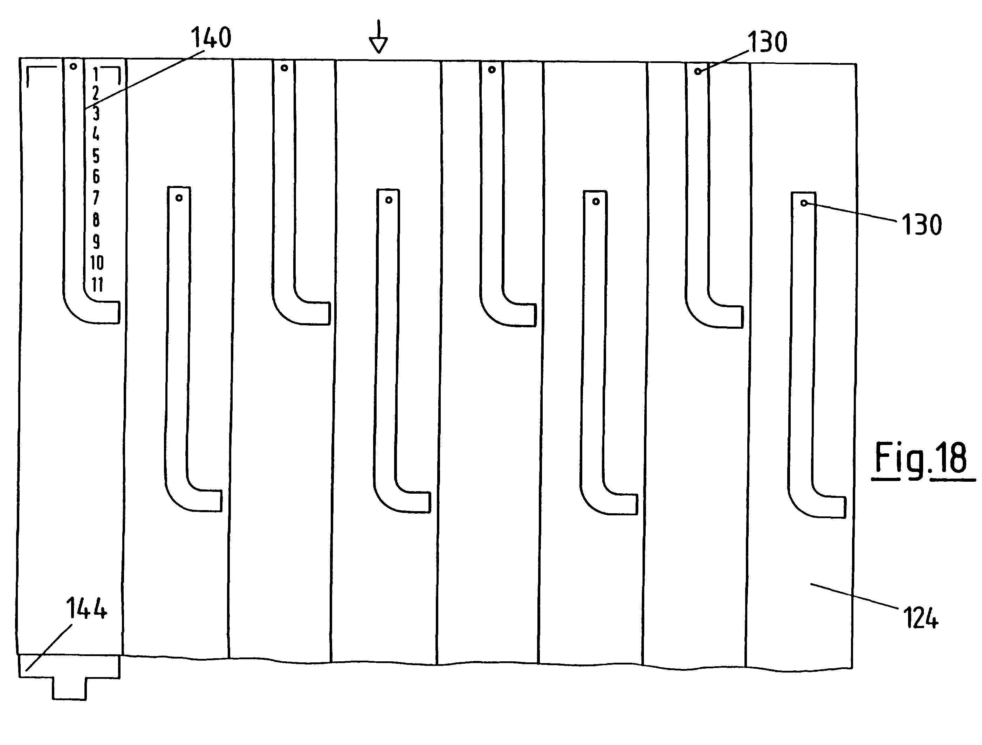

Die Figuren 17 und 18 zeigen ein weiteres Ausführungsbeispiel des erfindungsgemäßen Federspeichers.

Figur 17 zeigt einen Querschnitt durch dieses Ausführungsbeispiel. Demgemäß hat der Federspeicher ein achtkantiges Hauptdruckrohr 124, das in Figur 17 in Querschnitt dargestellt ist. An jede Seitenfläche (senkrecht zur Zeichenebene in Figur 17) des Hauptdruckrohrs 124 ist eine Federaufnahmehülse 126 befestigt, in der eine oder mehrere Federelemente 128 (gegebenenfalls axial hintereinanderliegend) angeordnet sind. Der Aufbau der Federaufnahmehülse 126 und der oder des Federelement(s) 128 kann in Prinzip dem Aufbau gleichen, wie er im Zusammenhang mit den vorhergehenden Ausführungsbeispielen beschrieben wurde. Demgemäß ist ein Endabschnitt der Federelemente 128 in der Federaufnahmehülse 126 abgestützt, während der andere Endabschnitt beispielsweise mit einem Mitnehmer 130 versehen ist, der die benachbarte Seitenwandung des Hauptdruckrohrs 124 und die zugeordnete Wandfläche der Federaufnahmehülse 126 durchsetzt, so daß ein Endabschnitt des Mitnehmers 130 in den vom Hauptdruckrohr 124 aufgespannten Innenraum auskragt. In der Seitenwandung des Hauptdruckrohrs 124 und der zugeordneten Wandfläche der Federaufnahmehülse 126 sind Schlitze ausgebildet, die eine Axialverschiebung (senkrecht zur Zeichenebene in Figur 17) des Mitnehmers 130 erlauben.

Beim gezeigten Ausführungsbeispiel trägt das Hauptdruckrohr 124 acht Federspeicherelemente 132 bis 138, die achsparallel zur Hauptdruckrohrachse 124 angeordnet sind.

Im Inneren des Hauptdruckrohrs 124 ist ein nicht gezeigter Druckkolben gleitend geführt, der als kraftaufnehmendes oder kraftübertragendes Element wirkt. Bei Kraftbeaufschlagung des Druckkolbens wird dieser in der Ansicht nach Figur 17 nach unten bewegt, so daß die Mitnehmer 130 durch Anlage an den Druckkolben mitgenommen werden. Auf diese Weise werden die Federelemente 128 vorgespannt.

Figur 18 zeigt eine Abwicklung des Hauptdruckrohrmantels, aus der die Anordnung der Schlitze 140 entnehmbar ist, die als Kulissenführungen zur Führung der Mitnehmer 130 dienen.

Die Geometrie jedes Schlitzes 140 in einer Teilmantelfläche des Hauptdruckrohrs 124 entspricht im wesentlichen derjenigen, wie sie im Zusammenhang mit dem Ausführungsbeispiel in Figur 16 beschrieben wurde. D.h., jeder Schlitz 140 hat einen Linearabschnitt, der in einen abgewinkelten Endabschnitt übergeht.

Wie aus der Darstellung gemäß Figur 18 hervorgeht, sind die acht Schlitze 140 des Hauptdruckrohrs 124 in zwei Gruppen angeordnet. Vier Schlitze 140 münden in dem in Figur 18 gezeigten oberen Umfangsrand des Hauptdruckrohrs 124, während die anderen vier Schlitze 140 in Axialrichtung versetzt angeordnet sind. Durch diese Anordnung wird erreicht, daß bei einer Abwärtsbewegung des Druckkolbens in Pfeilrichtung (Figur 18) zunächst nur die in den erstgenannten Schlitzen geführten Mitnehmer 130 mitgenommen werden, so daß die Federelemente 118 der zugeordneten Federspeicherelemente gespannt werden. Die Vorspannung der anderen vier Federspeicherelemente folgt erst nach einer vorbestimmten Axialbewegung des Druckkolbens. Selbstverständlich könnte die Geometrie der Schlitze 140 und die Axialposition der Mitnehmer 130 auch auf andere Weise ausgelegt werden, so daß beispielsweise sämtliche Mitnehmer 130 zueinander axial versetzt angeordnet sind, so daß die Federspeicherelemente 132 bis 138 nacheinander gespannt werden.

Bei dem vorstehend beschriebenen Ausführungsbeispiel sind die Schlitze 140 in den Seitenwandungen des Hauptdruckrohrs 124 ausgebildet. Die entsprechenden Schlitze in der Wandfläche der Federaufnahmehülee 126 müßten dann entsprechend oder zumindest so breit ausgeführt werden, daß der jeweilige Mitnehmer 130 ohne Behinderung in den Schlitzen 140 (in Axialrichtung oder quer dazu) verschiebbar ist.

Als Alternativausführungsbeispiel könnte man auch die in Figur 18 dargestellten Winkel-Schlitze 140 in der Wandfläche der Federaufnahmehülse 126 ausbilden und im Hauptdruckrohr 124 Schlitze ausbilden, die die gesamte Axial- und Querbewegung der Mitnehmerbolzen 130 zulassen. D.h., im erstgenannten Fall sind die Kulissenführungen im Hauptdruckrohr 124 ausgebildet, während im letztgenannten Fall die Kulissenführungen in der Federaufnahmehülse 126 vorgesehen sind.

Bei der in Figur 18 dargestellten Geometrie sind die benachbarten Schlitze wiederum überlappend angeordnet, so daß während eines vorbestimmten Hubabschnitts des Druckkolbens die Federspeicherelemente beider Gruppen gespannt werden und bei der Rückbewequng des Hauptkolbens Energie freigeben.

Damit der Hauptkolben über den angewinkelten Endbereich der oberen Schlitzgruppe (Figur 18) hinaus nach unten bewegt werden kann, muß dafür gesorgt werden, daß zumindest die in Figur 18 oben liegend angeordneten Mitnehmer aus dem Kollisionsbereich mit dem Hauptkolben hinausbewegt werden können. Dazu können beispielsweise am Druckkolben entsprechende Führungsschrägen ausgebildet werden, die den Mitnehmer beim Erreichen seiner Endlage im Winkelabschnitt des Schlitzes 140 nach außen hin bewegen, so daß dessen Endabschnitt nicht mehr in den Innenraum des Hauptdruckrohrs 124 hineinragt und der Druckkolben weiter nach unten bewegt werden kann, d.h., die Mitnehmer 130 klappen weg.

Alternativ dazu kann der Hauptdruckkolben mit Führungsausnehmungen 142 (angedeutet in Figur 17) versehen werden, in die der Mitnehmer 130 in seiner Endposition eintaucht, so daß der Hauptkolben weiter nach unten bewegt werden kann. Auch in diesem Fall ist die Rückbewegung des Mitnehmers 130 weg von seiner Endposition verhindert, da der Mitnehmer 130 nicht seitlich ausweichen kann, um in den linearen Teil des Schlitzes 140 zu gelangen.

Bei der Rückbewegung des Druckkolbens wird dann der Mitnehmer 130 entweder wieder aus seiner zurückgezogenen Position in seine in Figur 17 dargestellte Grundposition bewegt oder er wird - bei der letztgenannten Ausführungsform - aus der zugeordneten Führungsausnehmung 142 herausbewegt, so daß er wieder in seiner Anlageposition an der Kolbenstirnfläche anliegt.

Wie bereits bei den vorgenannten Ausführungsbeispielen kann jedes Federspeicherelement 132 bis 139 wiederum mit einer Vorspanneinrichtung 144 versehen sein, die es ermöglicht, die Federelemente 128 unabhängig von der Druckkolbenbewegung vorzuspannen.

Bei den beiden letztgenannten Ausführungsbeispielen werden einen Vielzahl von Federelementen gleichzeitig und/oder aufeinanderfolgend vorgespannt. Konstruktionsprinzipien, wie beispielsweise die Ausbildung von Kulissenführungen in der Federaufnahmehülse und von Schlitzen mit Freilauf-, Anschlag- und Linearabschnitten in der Mitnehmerhülse 110 können bei Federspeichern angewendet werden, bei denen mehr als ein Federelement gemäß der Erfindung verwendet wird. Die in den einzelnen Ausführungsbeispielen gezeigten Schlitz-/Kulissenführungsgeometrien sind selbstverständlich für sämtliche Ausführungsbeispiele geeignet. D.h., im wesentlichen sind sämtliche Konstruktionselemente der einzelnen Ausführungsbeispiele in beliebiger Weise miteinander kombinierbar, um die erfindungsgemäße Lösung herbeizuführen.

## Patentansprüche

1. Vorrichtung zur Speicherung von Federenergie, die mittels Relativbewegung zwischen einem stationären Halteelement (3; 33; 60; 100; 124) und einem beweglichen Läufer (6; 36; 61; 110; 126) erzeugt wird, wobei zwischen dem Halteelement und dem Läufer zumindest zwei Federn (10; 34; 63; 103, 104; 128) mit jeweils einem am Halteelement (3; 33; 60; 100; 124) angebrachten ersten Endabschnitt angeordnet sind, **dadurch gekennzeichnet, daß** die Federn bei Relativbewegung dieses Läufers (6; 36; 61; 110; 126) und Halteelementes (3; 33; 60; 100; 124) in eine erste Richtung zeitlich nacheinander vorspannbar sind und daß durch die Federn bei Relativbewegung dieses Läufers (6; 36; 61; 110; 126) und Halteelementes (3; 33; 60; 100; 124) in eine zur ersten Richtung entgegengesetzte zweite Richtung zeitlich nacheinander Federenergie abgebbar ist, derart
daß ein zum ersten Endabschnitt entgegengesetzt liegender zweiter Endabschnitt (14; 65; 106; 130) der zeitlich zuerst spannbaren Feder (10; 34; 63; 103, 104; 128) durch ein erstes Auslenken quer zur Richtung der Relativbewegung am Halteelement ablegbar ist, so daß bei weiterer Relativbewegung in die erste Richtung keine weitere Kraftbeaufschlagung zwischen Halteelement und Läufer durch die zuerst spannbare Feder erfolgt, und
daß der abgelegte zweite Endabschnitt (14; 65; 106; 130) der zeitlich zuerst gespannten Feder bei einer Relativbewegung in die zweite Richtung dem Läufer zuschaltbar ist und dadurch die Feder bei weiterer Relativbewegung in die zweite Richtung Federenergie abgeben kann.

2. Vorrichtung nach Anspruch 1, wobei das Halteelement (60) als eine Hülse ausgebildet ist und der Läufer (61) innerhalb des Halteelements (60) geführt ist.

3. Vorrichtung nach Anspruch 1 oder 2, wobei der zweite Endabschnitt der Feder (63) ein Druckelement (65) ist und die Feder (63) im gespannten Zustand mit dem Druckelement (65) in einer Aufnahme (69) des Halteelementes (60) ablegbar ist.

4. Vorrichtung nach Anspruch 1, wobei am zweiten Endabschnitt (14; 106) der Feder ein Mitnehmer vorgesehen ist, der in zumindest einem Schlitz (113, 114) des Läufers (6; 110) anordenbar ist, der zwei in Richtung der Relativbewegung verlaufende Linearabschnitte (20, 21; 122) und einen abgewinkelten Anlageabschnitt aufweist.

5. Vorrichtung nach Anspruch 4, wobei sich der Mitnehmer (14; 106) durch eine schlitzförmige Kulissenführung des Halteelements mit einem in Richtung der Relativbewegung verlaufenden Linearbereich und einem dazu angestellten angewinkelten Endbereich (16,17) erstreckt.

6. Vorrichtung nach Anspruch 5, wobei zumindest zwei Mitnehmer (14, 15; 106), zwei Kulissenführungen (103, 104) und zwei Schlitze (113, 114) vorgesehen sind.

7. Vorrichtung nach Anspruch 1, wobei das Halteelement ein Druckrohr (124) ist, am zweiten Endabschnitt von jeder Feder ein Mitnehmer (130) vorgesehen ist, dessen freier Endabschnitt in den Innenraum vom Halteelement vorsteht, und der Läufer ein Druckkolben ist.

8. Vorrichtung nach einem der vorhergehenden Ansprüche, wobei die zumindest zwei Federn (63; 103, 104; 128) in Bewegungsrichtung überlappende Arbeitsbereiche aufweisen.

9. Vorrichtung nach einem der vorhergehenden Ansprüche, wobei zumindest zwei Federn in Richtung der Relativbewegung parallel geschaltet sind.

10. Vorrichtung nach Anspruch 1, wobei eine Feder (34) innerhalb des stationären Halteelements (33) und eine weitere Feder (54) außerhalb des stationären Halteelements (33) vorgesehen ist.

## Claims

1. Device for storing spring energy generated by relative displacement of a stationary retaining element (3; 33; 60; 100; 124) and a mobile runner (6; 36; 61; 110; 126), at least two springs (10; 34; 63; 103, 104; 128) being arranged between said retaining element and said runner, wherein a first end portion of each spring is attached to said retaining element (3; 33; 60; 100; 124),
**characterised in that**
said springs are capable of being biased in temporal succession upon relative displacement of said runner (6; 36; 61; 110; 126) and said retaining element (3; 33; 60; 100; 124) into a first direction, and that said springs are capable of releasing spring energy in temporal succession upon relative displacement of said runner (6; 36; 61; 110; 126) and said retaining element (3; 33; 60; 100; 124) into a second direction opposite to said first direction, such that
a second end portion (14; 65; 106; 130) of the spring (10; 34; 63; 103, 104; 128) loaded at a first point of time, which is opposite from said first end portion, is capable of being immobilised on said retaining element by a first displacement transversal to the direction of the relative displacement in such a way that during a further relative displacement in said first direction no further force is exerted between said runner and said retaining element by said spring loaded at a first point of time, and
that said immobilised second end portion (14; 65; 106; 130) of the spring loaded at a first point of time is connectable to said runner upon relative displacement into said second direction, and said spring is thereby enabled to output spring energy upon a further relative displacement into said second direction.

2. The device according to claim 1, wherein said retaining element (60) has the form of a sleeve and said runner (61) is guided inside said retaining element (60).

3. The device according to claim 1 or 2, wherein said second end portion of said spring (63) is a pressure member (65) and said spring (63) is capable in a loaded condition of being immobilised in a reception (69) of said retaining element (60) with said pressure member (65).

4. The device according to claim 1, wherein a drive member is provided at said second end portion (14; 106) of said spring and is capable of being arranged in at least one slot (113, 114) of said runner (6; 110), said slot having two linear portions (20, 21; 122) extending in the direction of said relative displacement and an angled contact portion.

5. The device according to claim 4, wherein said drive member (14; 106) extends through a slot-shaped guide path of said retaining element which includes a linear portion extending in the direction of the relative displacement and an end portion (16; 17) extending at an angle thereto.

6. The device according to claim 5, wherein at least two drive members (14, 15; 106), two guide paths (103, 104) and two slots (113, 114) are provided.

7. The device according to claim 1, wherein said retaining element is a pressure tube (124), a drive member (130) being arranged at the second end portion of each spring, the free end portion of each drive member projecting into the cavity of said pressure tube and said runner being a pressure piston.

8. The device according to any one of the preceding claims, wherein said at least two springs (63; 103, 104; 128) comprise work ranges overlapping in the direction of displacement.

9. The device according to any one of the preceding claims, wherein at least two springs are arranged in parallel in the direction of displacement.

10. The device according to claim 1, wherein one spring (34) is arranged inside said stationary retaining element (33), and another spring (54) is provided outside said stationary retaining element (33).

## Revendications

1. Dispositif pour l'accumulation d'énergie de ressort qui est produite au moyen d'un mouvement relatif entre un élément de maintien stationnaire (3; 33; 60; 100; 124) et un curseur mobile (6; 36; 61; 110; 126), entre l'élément de maintien et le curseur deux ressorts (10; 34; 63; 103, 104; 128) au moins étant disposés et présentant chacun une première section terminale fixée à l'élément de maintien (3; 33; 60; 100; 124),
*caractérisé en ce que* les ressorts peuvent être précontraints successivement dans le temps lors d'un mouvement relatif dudit curseur (6; 36; 61; 110; 126) et élément de maintien (3; 33; 60; 100; 124) dans une première direction et que par l'intermédiaire des ressorts de l'énergie de ressort peut être dégagée successivement dans le temps lors d'un mouvement relatif dudit curseur (6; 36; 61; 110; 126) et élément de maintien (3; 33; 60; 100; 124) dans une seconde direction opposée à la première direction de manière qu'une seconde section terminale (14; 65; 106; 130), située opposée à la première section terminale, du ressort (10; 34; 63; 103; 104; 128) qui peut être serré d'abord dans le temps peut être déposée à l'élément de maintien par une première déviation transversalement par rapport à la direction du mouvement relatif, de sorte que lors d'un mouvement relatif ultérieur dans la première direction, le ressort qui peut être serré en premier n'exerce pas de force ultérieure entre l'élément de maintien et le curseur, et
*que* la seconde section terminale (14; 65; 106; 130) déposée du ressort serré en premier dans le temps peut être raccordée au curseur lors d'un mouvement relatif dans la seconde direction et que de cette manière le ressort peut dégager de l'énergie de ressort lors d'un mouvement relatif ultérieur dans la seconde direction.

2. Dispositif selon la revendication 1, dans lequel l'élément de maintien (60) est formé comme une douille et le curseur (61) est guidé à l'intérieur de l'élément de maintien (60).

3. Dispositif selon la revendication 1 ou 2, dans lequel la seconde section terminale du ressort (63) est un élément de compression (65) et le ressort (63) peut être déposé dans l'état serré avec l'élément de compression (65) dans un logement (69) de l'élément de maintien (60).

4. Dispositif selon la revendication 1, dans lequel la seconde section terminale (14; 106) du ressort présente un élément d'entraînement qui peut être disposé dans au moins une fente (113, 114) du curseur (6; 110), qui présente deux sections linéaires (20, 21; 122) s'étendant en direction du mouvement relatif et une section de contact coudée.

5. Dispositif selon la revendication 4, dans lequel l'élément d'entraînement (14; 106) s'étend à travers un guidage en coulisse sous forme de fente de l'élément de maintien présentant une section linéaire s'étendant en direction du mouvement relatif et une zone d'extrémité (16, 17) coudée défléchie par rapport à celle-ci.

6. Dispositif selon la revendication 5, dans lequel au moins deux éléments d'entraînement (14, 15; 106), deux guidages en coulisse (103, 104) et deux fentes (113, 114) sont prévus.

7. Dispositif selon la revendication 1, dans lequel l'élément de maintien est un tube de compression (124), chaque ressort présente un élément d'entraînement (130) à la seconde section terminale, dont la section terminale libre avance dans l'espace intérieur de l'élément de maintien, et le curseur est un piston de compression.

8. Dispositif selon l'une quelconque des revendications précédentes, dans lequel les ressorts (63; 103, 104; 128) qui sont au moins au nombre de deux présentent des zones de travail chevauchantes dans la direction du mouvement.

9. Dispositif selon l'une quelconque des revendications précédentes, dans lequel au moins deux ressorts sont montés en parallèle en direction du mouvement relatif.

10. Dispositif selon la revendication 1, dans lequel un ressort (34) est prévu à l'intérieur de l'élément de maintien stationnaire (33), et un ressort supplémentaire (54) est prévu en dehors de l'élément de maintien stationnaire (33).
